# EUROPEAN PATENT SPECIFICATION

(11) **EP 1 819 536 B1**
(45) Date of publication and mention of the grant of the patent: **18.05.2011**
(21) Application number: 04800408.9
(22) Date of filing: 26.11.2004
(51) Int. Cl.: B60G 7/00, B60G 9/02

(54) **A MOUNTING SYSTEM FOR A V-STAY IN A LARGE VEHICLE**
BEFESTIGUNGSSYSTEM FÜR EINE V-STREBE IN EINEM GROSSEN FAHRZEUG
SYSTEME DE MONTAGE POUR UN SUPPORT EN FORME DE V, DANS UN GRAND VEHICULE

(43) Date of publication of application: 22.08.2007
(73) Proprietor: VOLVO LASTVAGNAR AB, 405 08 Göteborg (SE)
(72) Inventor: ANGERFORS, Dan, S-448 31 FLODA (SE); RANUM, Odd, S-464 91 Dals Rostock (SE)
(74) Representative: Fröhling, Werner Otto
(86) International application number: PCT/SE2004/001751
(87) International publication number: WO 2006/057585

(56) References cited:
- EP-A1- 1 120 299
- JP-A- 4 143 110
- US-A- 2 195 589
- US-A- 4 746 239
- US-A1- 2003 089 546
- US-A1- 2004 012 167
- US-B1- 6 305 699

## Description

The present invention relates to a mounting system for securing an axle casing to a frame of a vehicle by a V-stay connecting the axle casing to right frame portions and left frame portions of the frame, where said V-stay includes two arms which are joined together in a mounting bushing and a fastening member extending through said bushing generally parallel to the axle casing, where said fastening member is provided with first and second mounting brackets at each protruding end and that said first and second brackets are secured to corresponding first and second bosses provided on the top of the axle casing by a first and second threading members, which are extending through mounting holes in the first and second brackets and in the first and second bosses, and where the first and second brackets and first and second bosses are provided with complementary contact surfaces.

A mounting system of such kind is known from EP-A-1 120 299 (on which the preamble of claim 1 is based). This mounting structure for a suspension V-rod is used in a large-sized vehicle, such as a truck or a bus to suspend the rear axle or axles. The suspension structure in vehicle includes amongst other elements a V-rod structure connecting the rear wheel axle and the frame for transferring acceleration and brake forces from the axle to the frame and for keeping the rear axle in its sideways position.

In the mounting system, the bolts fastening the traverse fastening bar to the bosses on the axel casing absorb the shearing forces and transfer these forces from the axle to the frame. In order to ensure this transfer in the mounting system, the bolts are fastened with a predetermined torque control so that sufficient frictional force and thereby a firm connection between the brackets and bosses is provided for absorbing the acceleration and brake forces. However, this results in a high pre-loaded stress on the fastening bolts. If the bolts in excessive loading conditions are also loaded with shearing stress when absorbing lateral forces acting generally parallel to the contact surfaces of the brackets and bosses, the bolts may damage or even break. This implicates a separation risk between the V-stay and the axle, if the bolts are loaded to an extent where there is a risk of breaking the bolts. To reduce this risk, the mounting structure must be frequently maintained.

Another mounting system is known from U.S. patent No. 2 195 589 A. This mounting structure relates to a mounting for demountable dual, disc wheels and provides a dual disc wheel having interchangeable inner and outer discs identical in shape and dimension and capable of being interlocked without sacrifice of identity of shape and dimension of the interlocking members on the different discs.

An object of the invention is to provide a mounting structure of the initially mentioned kind, where the risk of separation is eliminated due to fracturing the bolts.

The invention consists of a mounting system of the initially mentioned kind, wherein the bosses on the axle and the corresponding brackets on the fastening member are provided with mating contact surfaces that are tapered around the mounting holes.

By providing mating tapered contact surfaces on the boss and the bracket on each side of the V-stay bushing, the threading members, e.g. the bolts, relieved of shearing stress loads, as any lateral impact on the mounting system may be absorbed by the mating contact surfaces of the boss and bracket fastening on each side of the bushing of the V-stay. Besides absorbing impacts and relieving the stress on the threading members, the fastening member is easily mountable in the bosses on the axle casing by a mounting system according to the invention, since the tapered contact surfaces are self-centring and the two parts are thereby easily correctly positioned and secured by two threading members.

Preferably, the tapered surfaces are conically tapered. This shape is easy to manufacture and makes the two parts, i.e. a bracket and a boss, easy to align and thereby position correctly relatively to each other. Alternatively, the tapered surfaces could be spherical or any other geometric shape where the diameter is reduced in the direction of the threading member.

In the preferred embodiment, the tapered surfaces of the bosses are provided as recesses. This makes the mounting easy.

In one embodiment of the invention, the mounting holes of the bosses are through holes and the threading members are bolts and nuts. Alternatively, the mounting holes of the bosses are provided with internal threading in which the threading members, in this embodiment bolt screws, are secured. According to the actual application, the type of threading member and adaptations to the axel bosses may be chosen.

In the following, the invention is described in more detail with reference to the accompanying drawings, in which:
- Fig. 1: is a perspective view of an undercarriage of a large-sized vehicle;
- Fig. 2: is a top view of a V-stay according to a preferred embodiment of the invention;
- Fig. 3: is a detailed top view of a mounting system according to the invention;
- Fig. 4: is a detailed side view of an alternative mounting system according to the invention; and
- Figs. 5 and 6: are sectional views of two other embodiments of mounting details in a mounting system according to the invention.

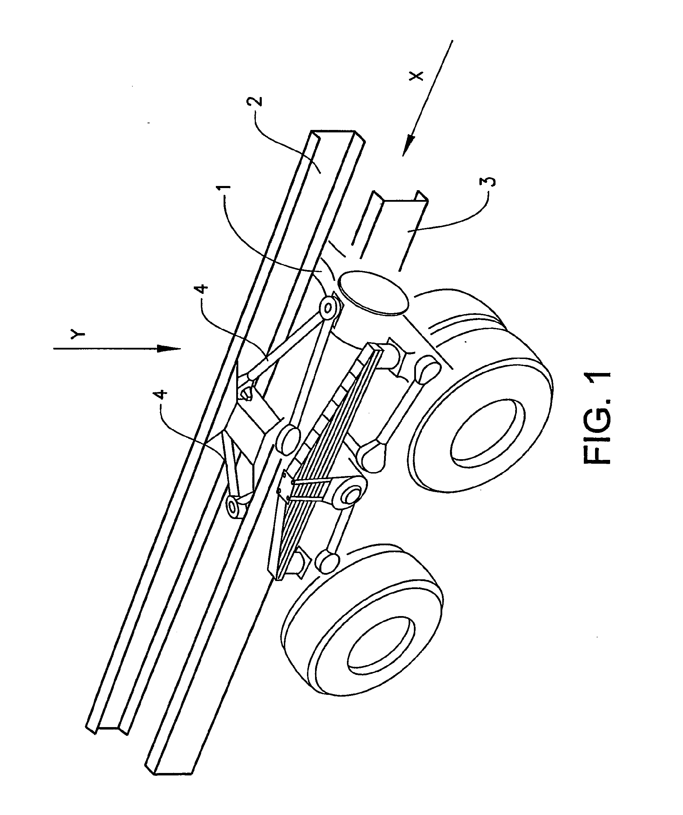

As shown in figure 1, the undercarriage of a large vehicle, such as a truck or a bus, includes a frame 2, 3 and one or more axles 1. Each axle 1 is connected to the frame by a suspension and different support stays, including a V-stay 4 for connecting the axle to the two longitudinal frame beams 2, 3 for thereby transferring acceleration and brake forces from the axle to the frame. The V-stay also fixates the axle sideways.

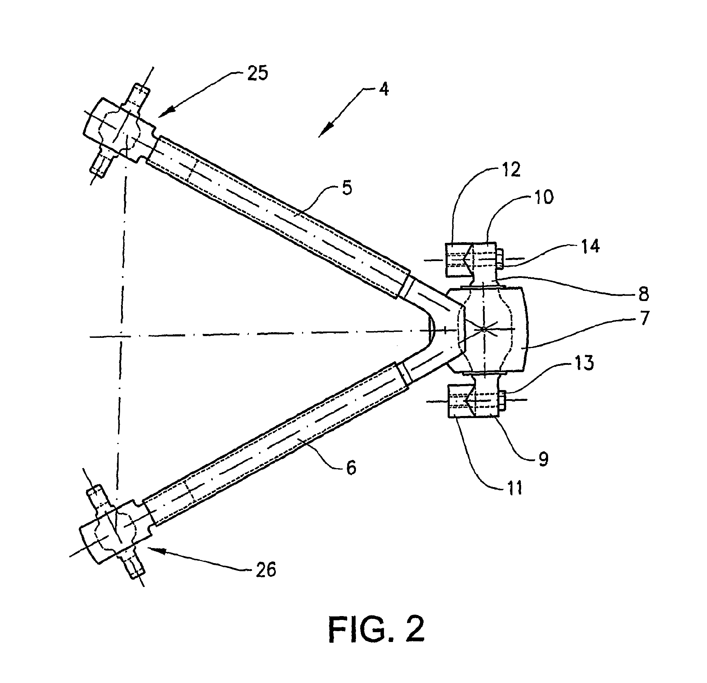

In figure 2, the V-stay 4 with a horizontal mounting is shown in more detail in the direction indicated by arrow Y. The V-stay 4 comprises two connection rods 5,6 that are provided in a V-shape and joined at their first ends by a bushing 7. At the second ends, the rods 5, 6 are provided with mounting means 25, 26, known to the skilled person, for fastening the V-stay 4 to the frame. On the axle casing (not shown in fig. 2), a first boss 11 and second boss 12 are provided. The bushing 7 is secured to the first and second bosses 11, 12 by a fastening member 8, which extends through the bushing 7. The fastening member 8 is provided with first and second brackets 9, 10 on each side of the bushing 7. The first bracket 9 is designed to cooperate with the first boss 11, and similarly, the second bracket 10 is designed to cooperate with the second boss 12. The brackets 9, 11 and the bosses 10, 12, are, respectively, secured to each other by bolt screws 13, 14. In this embodiment, the tapering of the brackets and bosses will unload the bolts 13, 14 from all strain forces except for pure tensile forces.

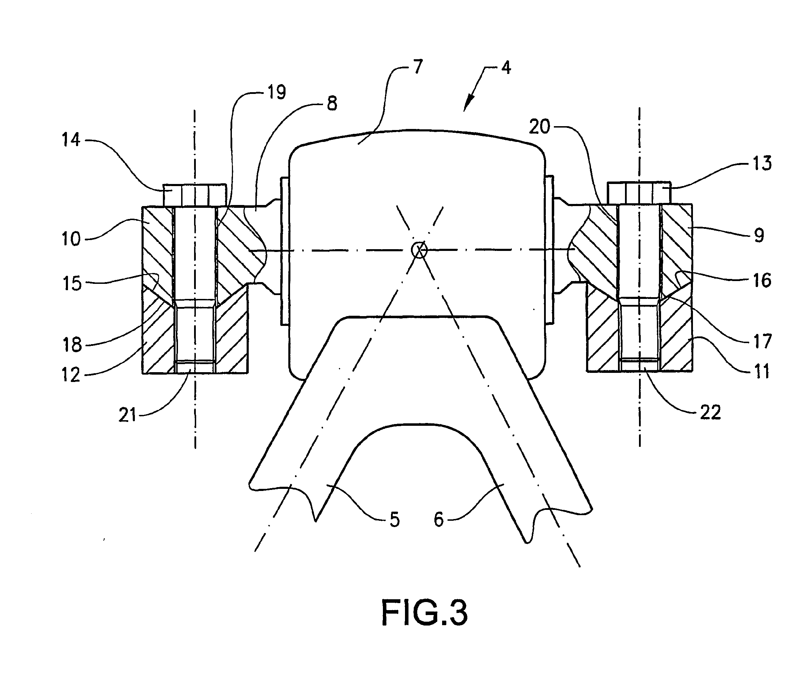

As shown in more detail in figure 3, the brackets 9, 10 of the fastening member 8 are provided with tapered contact surfaces 15, 16 and correspondingly shaped, tapered contact surfaces 17, 18 are provided on the bosses 11, 12. The bracket contact surfaces 15, 16 and the mating contact surfaces on the bosses 11, 12 are brought into contact with each other when the fastening member 8 is secured to the axle casing (not shown). The first bracket 9 is provided with a through-going hole 20 essentially perpendicular to the orientation of the fastening member 8. The corresponding first boss 11 is also provided with a hole 22, which - as shown in the figure 3 - may be provided with an internal threading for receiving a first screw bolt 13. This design is mirrored on the second side of the bushing 7, where the second bracket 10 mates with the second boss 12 and are both provided with aligned holes 19, 21, where the boss hole 21 is provided with an internal threading.

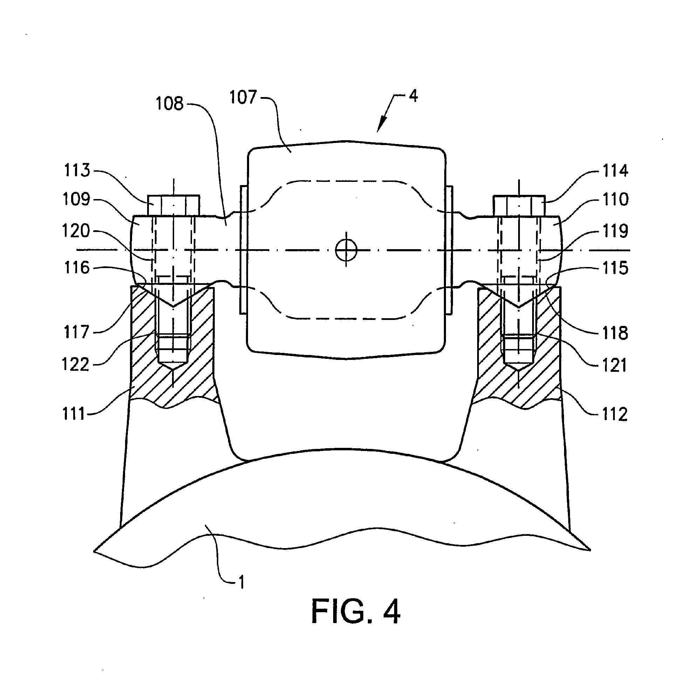

In figure 4, a view of a vertical mounting system for a V-stay 4 is shown in more detail in the direction indicated by arrow X. The V-stay 4 comprises a bushing 107. On the axle casing 1, a first boss 111 and second boss 112 are provided. The bushing 107 is secured to the first and second bosses 111, 112 by a fastening member 108, which extends through the bushing 107. The fastening member 108 is provided with first and second brackets 109, 110 on each side of the bushing 107. The first bracket 109 is designed to cooperate with the first boss 111, and similarly, the second bracket 110 is designed to cooperate with the second boss 112. The brackets 109, 111 and the bosses 110, 112, are, respectively, secured to each other by bolt screws 113, 114.

The brackets 109, 110 of the fastening member 108 are provided with tapered contact surfaces 116, 115 and correspondingly shaped, tapered contact surfaces 117, 118 are provided on the bosses 111, 112. The bracket contact surfaces 115, 116 and the mating contact surfaces on the bosses 111, 112 are brought into contact with each other when the fastening member 108 is secured to the axle casing 1. The first bracket 109 is provided with a through-going hole 120 essentially perpendicular to the orientation of the fastening member 108. The corresponding first boss 111 is also provided with a blind hole 122, which is provided with an internal threading for receiving a first screw bolt 113. This design is mirrored on the second side of the bushing 107, where the second bracket 110 mates with the second boss 112 and are both provided with aligned holes 119, 121, where the boss hole 121 is a blind hole provided with an internal threading.

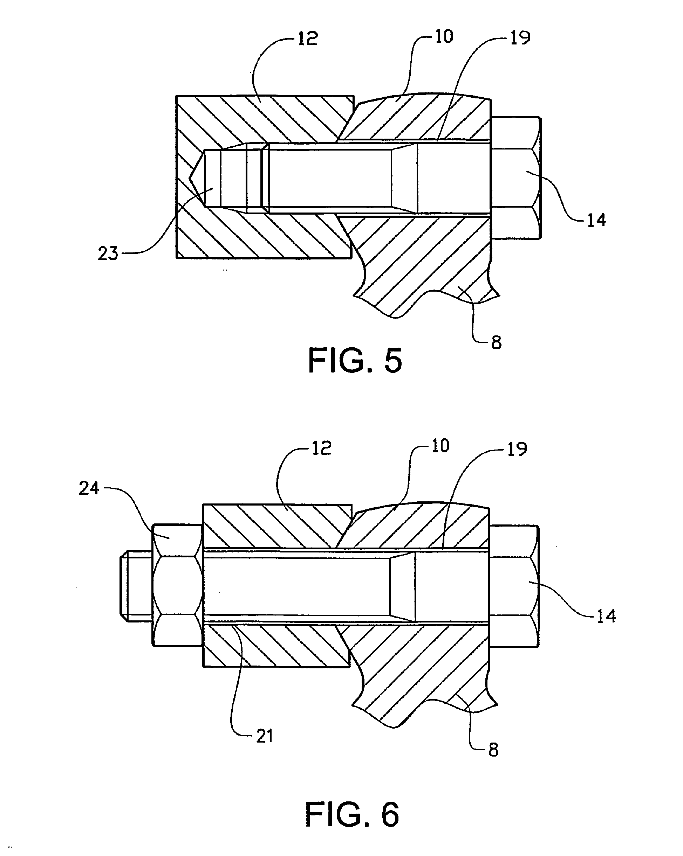

In the embodiment shown in figure 3, the boss 12 is provided with an internally threaded hole 21 that extends through the boss 12 and in which the screw bolt 14 is tightened and the bracket 10 of the fastening member 8 is thereby firmly secured to the boss 12. In an alternative embodiment, the boss 12 may be provided with a blind hole 23, as shown in fig. 5. In yet another embodiment shown in fig. 6, the boss 12 may be provided with a through-going hole 21 without internal threading and a bolt 14 is used and the boss 12 and the bracket 10 of the fastening member 8 are firmly secured to each other by a fastening the nut 24 on the portion of the bolt 14 extending beyond the hole 21 of the boss 12. The different types of holes can also be used for the embodiment shown in figure 4.

The invention is described above with reference to some preferred embodiments. However, it is realised that variations of the mounting system according to the invention may be made without departing from the scope of the accompanying claims.

## Claims

1. A mounting system for securing a vehicle axle (1) to a V-stay (4), where the axle (1) is provided with first and second mounting bosses (11, 12; 111, 112) and the V-stay (4) is provided with a bushing (7) through which a fastening member (8) extends, the fastening member (8) being provided with first and second mounting brackets (9, 10; 109, 110) on each side of the bushing (7) corresponding with the first and second mounting bosses (11, 12; 111, 112), wherein the axle (1) is secured to the V-stay (4) by first and second threading members (13, 14; 113, 114) and mounting holes (19, 21; 20, 22; 119, 121; 120, 122) comprised in the first and second brackets (9, 10; 109, 110) and in the first and second bosses (11,12; 111, 112),
**characterised in that**
the bosses (11, 12; 111, 112) and the brackets (9, 10; 109, 110) are provided with mating contact surfaces (15, 18; 16, 17; 115, 118; 116, 117) that are tapered around the mounting holes (19, 21; 20, 22; 119, 121; 120, 122).

2. A mounting system according to claim 1, wherein the tapered surfaces (15, 18; 16, 17; 115, 118; 116, 117) are conically tapered.

3. A mounting system according to claim 1 or 2, wherein the tapered surfaces (17, 18; 117, 118) of the bosses (11, 12; 111, 112) are provided as recesses.

4. A mounting system according to any of the claims 1 to 3, wherein the mounting holes (21, 22; 121, 122) of the bosses (11, 12; 111, 112) are through holes and the threading members (13, 14; 113, 114) are bolts and nuts.

5. A mounting system according to any of the claims 1 to 3, wherein the mounting holes (21, 22; 121, 122) of the bosses (11, 12; 111, 112) are provided with internal threading in which the threading members (13, 14; 113, 114), which are bolt screws, are secured.

6. A mounting system according to any of the claims 1 to 5, wherein the mounting system is positioned such that the threading members (13, 14; 113, 114) are substantially horizontal.

7. A mounting system according to any of the claims 1 to 5, wherein the mounting system is positioned such that the threading members (13, 14; 113, 114) are substantially vertical.

8. A vehicle comprising at least one mounting system according to any of claims 1 to 7.

## Patentansprüche

1. Montagesystem zur Befestigung einer Fahrzeugachse (1) an einer V-Strebe (4), wobei die Achse (1) mit einem ersten und einem zweiten Montageansatz (11, 12; 111, 112) versehen ist und die V-Strebe (4) mit einer Buchse (7) versehen ist, durch die sich ein Befestigungselement (8) erstreckt, wobei das Befestigungselement (8) mit einer ersten und einer zweiten Montagehalterung (9, 10; 109, 110) auf jeder Seite der Buchse (7) entsprechend dem ersten und zweiten Montageansatz (11, 12; 111, 112) versehen ist, wobei die Achse (1) an der V-Strebe (4) durch ein erstes und ein zweites Gewindeelement (13, 14; 113, 114) und Befestigungsöffnungen (19, 21; 20, 22; 119, 121; 120, 122) befestigt ist, die in der ersten und zweiten Halterung (9, 10; 109, 110) und in dem ersten und zweiten Ansatz (11, 12; 111, 112) vorgesehen sind, **dadurch gekennzeichnet, dass**
die Ansätze (11, 12; 111, 112) und die Halterungen (9, 10; 109, 110) mit zusammenpassenden Kontaktflächen (15, 18; 16, 17; 115, 118; 116, 117) versehen sind, die um die Befestigungsöffnungen (19, 21; 20, 22; 119, 121; 120, 122) angeschrägt ausgebildet sind.

2. Montagesystem nach Anspruch 1, bei dem die angeschrägt ausgebildeten Flächen (15, 18; 16, 17; 115, 118; 116, 117) konisch angeschrägt ausgebildet sind.

3. Montagesystem nach Anspruch 1 oder 2, bei dem die angeschrägt ausgebildeten Flächen (17, 18; 117, 118) der Ansätze (11, 12; 111, 112) als Ausnehmungen ausgebildet sind.

4. Montagesystem nach einem der Ansprüche 1 bis 3, bei dem die Befestigungsöffnungen (21, 22; 121, 122) der Ansätze (11, 12; 111, 112) Durchgangsöffnungen sind und die Gewindeelemente (13, 14; 113, 114) Bolzen und Muttern sind.

5. Montagesystem nach einem der Ansprüche 1 bis 3, bei dem die Befestigungsöffnungen (21, 22; 121, 122) der Ansätze (11, 12; 111, 112) mit Innengewinden versehen sind, in denen die Gewindeelemente (13, 14; 113, 114), die Bolzenschrauben sind, befestigt sind.

6. Montagesystem nach einem der Ansprüche 1 bis 5, bei dem das Montagesystem so positioniert ist, dass die Gewindeelemente (13, 14; 113, 114) im Wesentlichen horizontal sind.

7. Montagesystem nach einem der Ansprüche 1 bis 5, bei dem das Montagesystem so positioniert ist, dass die Gewindeelemente (13, 14; 113, 114) im Wesentlichen vertikal sind.

8. Fahrzeug mit wenigstens einem Montagesystem nach einem der Ansprüche 1 bis 7.

## Revendications

1. Système de montage pour fixer un essieu de véhicule (1) sur un support en forme de V (4), l'essieu (1) étant doté de premier et second bossages de montage (11, 12 ; 111, 112) et le support en forme de V (4) étant doté d'une douille (7) à travers laquelle un élément de fixation (8) s'étend, l'élément de fixation (8) étant muni de premier et second supports de montage (9, 10 ; 109, 110) sur chaque côté de la douille (7) correspondant aux premier et second bossages de montage (11, 12 ; 111, 112), dans lequel l'essieu (1) est fixé sur le support en forme de V (4) par des premier et second éléments de filetage (13, 14 ; 113, 114) et des trous de montage (19, 21 ; 20, 22 ; 119, 121 ; 120, 122) compris dans les premier et second étriers (9, 10 ; 109, 110) et dans les premier et second bossages (11, 12 ; 111, 112),
**caractérisé en ce que**
les bossages (11, 12 ; 111, 112) et les étriers (9, 10 ; 109, 110) sont dotés de surfaces de contact d'appariement (15, 18 ; 16, 17 ; 115, 118; 116, 117) qui sont effilées autour des trous de montage (19, 21 ; 20, 22; 119, 121 ; 120, 122).

2. Système de montage selon la revendication 1, dans lequel les surfaces effilées (15, 18 ; 16, 17 ; 115, 118 ; 116, 117) sont effilées de manière conique.

3. Système de montage selon la revendication 1 ou 2, dans lequel les surfaces effilées (17, 18 ; 117, 118) des bossages (11, 12 ; 111, 112) sont fournies sous la forme d'évidements.

4. Système de montage selon l'une quelconque des revendications 1 à 3, dans lequel les trous de montage (21, 22 ; 121, 122) des bossages (11, 12 ; 111, 112) sont des trous traversants et les éléments de filetage (13, 14 ; 113, 114) sont des boulons et des écrous.

5. Système de montage selon l'une quelconque des revendications 1 à 3, dans lequel les trous de montage (21, 22 ; 121, 122) des bossages (11, 12 ; 111, 112) sont dotés d'un filetage interne dans lequel les éléments de filetage (13, 14 ; 113, 114), qui sont des vis à boulon, sont fixés.

6. Système de montage selon l'une quelconque des revendications 1 à 5, dans lequel le système de montage est positionné de manière à ce que les éléments de filetage (13, 14 ; 113, 114) soient sensiblement horizontaux.

7. Système de montage selon l'une quelconque des revendications 1 à 5, dans lequel le système de montage est positionné de manière à ce que les éléments de filetage (13, 14 ; 113, 114) soient sensiblement verticaux.

8. Véhicule comprenant au moins un système de montage selon l'une quelconque des revendications 1 à 7.
